# EUROPÄISCHE PATENTANMELDUNG

(11) **EP 0 596 854 A1**
(43) Veröffentlichungstag der Anmeldung: **11.05.1994**
(21) Anmeldenummer: 93890208.7
(22) Anmeldetag: 25.10.1993
(51) Int. Cl.: F01N 3/20, F01N 3/28

(54) **Katalysator**

(30) Priorität: 02.11.1992 AT 2166/92
(71) Anmelder: AVL Gesellschaft für Verbrennungskraftmaschinen und Messtechnik mbH.Prof.Dr.Dr.h.c. Hans List, A-8020 Graz (AT)
(72) Erfinder: Kriegler, Wolfgang, Dipl.-Ing., A-9470 St. Paul i. Lavanttal (AT); Rasser, Michael, Dipl.-Ing., A-8045 Graz (AT); Fischer, Christof D.,Dipl.-Ing., A-8047 Graz (AT)
(74) Vertreter: Krause, Walter, Dr. Dipl.-Ing.

(57) **Zusammenfassung**

Zur Verbesserung des Ansprechverhaltens eines Katalysators (1) in der Abgasanlage einer Brennkraftmaschine, vorzugsweise in einem Hybridantrieb, wird vorgeschlagen, daß der Latentwärme- speicher (4) im Inneren des Katalysators (1) angeordnet ist, oder den Katalysator (1) mantelförmig umschließt, sodaß der Katalysator (1) in direktem thermischem Kontakt mit dem Latentwärmespeicher (4) steht.

## Beschreibung

Die Erfindung betrifft einen Katalysator in der Abgasanlage einer Brennkraftmaschine, vorzugsweise in einem Hybridantrieb.

Bei Katalysatoren in der Abgasablage von Brennkraftmaschinen tritt allgemein das Problem auf, daß der Katalysator nach dem Starten der Brennkraftmaschine bis zum Erreichen einer Betriebs- oder Ansprechtemperatur seine Aufgabe nur schlecht erfüllt und die Abgase im wesentlichen ungereinigt entläßt.

Insbesondere bei Fahrzeugen mit Hybridantrieb tritt dieses Problem nicht nur bei Inbetriebnahme sondern auch während des Betriebes auf, da die Brennkraftmaschine gemäß den jeweiligen Erfordernissen oftmals ein- und ausgeschaltet wird. Über große Teile der Gesamtbetriebszeit eines Fahrzeugs mit Hybridantrieb ist daher mit großen Temperaturschwankungen des Katalysators und deshalb nur mit einem sehr schlechten Wirkungsgrad zu rechnen.

Zur Lösung dieses Problems wurden bereits sogenannte Zusatz- oder Bypasskatalysatoren vorgeschlagen, deren Ansprechtemperatur bei niedrigen Werten liegt und welchen über eine Regeleinrichtung in der Startphase die Abgase zugeleitet werden. Nach dem Erreichen der Betriebs- bzw. Ansprechtemperatur des Hauptkatalysators wird diesem der Abgasstrom zugeleitet. Ein derartiges Katalysatorsystem ist jedoch relativ großvolumig und weist einen größeren Herstellungs- und Betriebsaufwand auf.

Aus der DE-OS 33 22 439 ist in diesem Zusammenhang eine Abgaseinrichtung bekannt geworden, bei welcher zwischen einem Filterkatalysator und dem Motor ein von den heißen Motorabgasen umströmtes Wärmespeicherelement angeordnet ist.

Aufgabe der Erfindung ist es bei einem Katalysator einer Brennkraftmaschine, vorzugsweise bei Verwendung in einem Hybridantrieb mit einfachen Mitteln das Ansprechverhalten weiter zu verbessern.

Diese Aufgabe wird erfindungsgemäß dadurch gelöst, daß der Latentwärmespeicher im Inneren des Katalysators angeordnet ist, oder den Katalysator mantelförmig umschließt, sodaß der Katalysator in direktem thermischem Kontakt mit dem Latentwärmespeicher steht.

Vorteilhafterweise stellt der Katalysator sowohl eine Wärmequelle (während der Betriebsphase) als auch eine Wärmesenke (während der Startphase) dar. Die während des Betriebes der Brennkraftmaschine gewonnene Wärmeenergie kann somit ohne Verwendung von Wärmeleitmedien bzw. Wärmeleiteinrichtungen an Ort und Stelle für die Startphase verwendet werden. Damit unterscheidet sich dieses System auch von Motorvorwärmsystemen mit Latentwärmespeichern, da diese ein Wärmeleitmedium (z.B. Kühlwasser oder Motorabgase) benötigten und bei viel niedrigeren Temperaturen arbeiten.

Falls der Latentwärmespeicher im Inneren des Katalysators angeordnet ist, kann der Latentwärmespeicher erfindungsgemäß im wesentlichen zylindrisch bzw. hohlzylindrisch ausgeführt sein und gegebenenfalls dessen Oberfläche vergrößernde Rippen auf weisen.

Um Wärmeverluste in die Umgebung zu vermeiden kann der Katalysator samt zugeordnetem Latentwärmespeicher von einer thermischen Isolierschicht umgeben sein.

Um auch die Wärmeverluste über die Abgasanlage zu vermeiden ist erfindungsgemäß vorgesehen, daß in der Abgaszu- und Abgasabführleitung des Katalysators Klappen angeordnet sind, welche sich bei Stillstand der Brennkraftmaschine schließen.

Weiters ist erfindungsgemäß vorgesehen, daß der Latentwärmespeicher ein Speichermedium enthält, dessen Umwandlungs- bzw. Umkristallisationstemperatur bei der Ansprechtemperatur des Katalysators oder knapp darüber, vorzugsweise zwischen 200°C und 350°C, liegt, wobei das Speichermedium aus einem Metall oder einer metallischen Legierung mit hoher spezifischer Wärmekapazität und geringem spezifischem Gewicht besteht. Vorzugsweise sind dafür Lithiumlegierungen geeignet.

Die Erfindung wird im folgenden anhand von Ausführungsbeispielen näher erläutert.
- Fig. 1: zeigt einen erfindungsgemäßen Katalysator mit Latentwärmespeicher in einem Längsschnitt,
- Fig. 2: einen Schnitt entlang Linie II-II in Fig. 1 sowie die
- Fig. 3 und 4: eine Ausführungsvariante in den Figuren 1 und 2 entsprechenden Schnittdarstellungen.

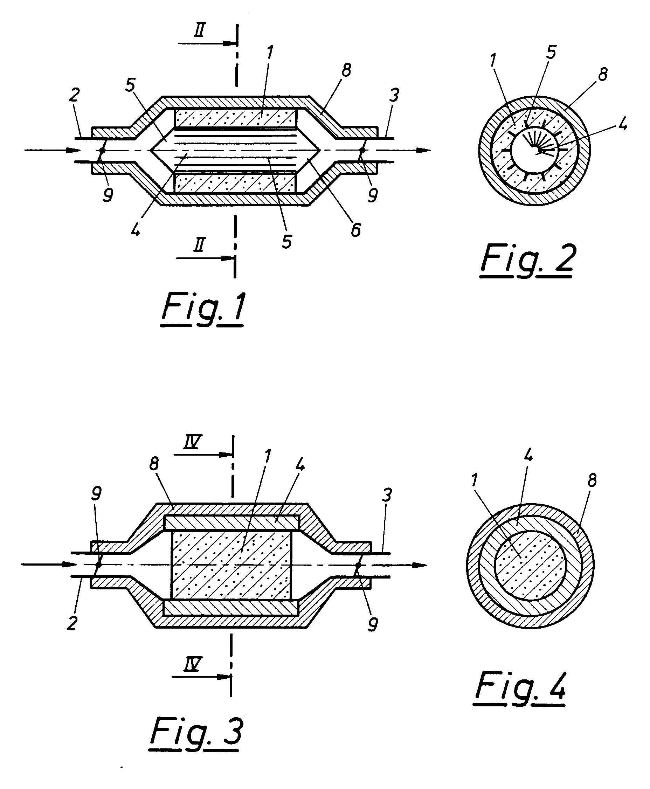

Die in den Figuren 1 und 2 dargestellte Katalysatoranordnung weist einen in einer Abgasanlage einer Brennkraftmaschine angeordneten Katalysator 1 mit einer Abgaszuführleitung 2 und einer Abführleitung 3 auf. Der Katalysator 1 umschließt mantelförmig einen beispielsweise zylindrischen Latentwärmespeicher 4, dessen Oberfläche durch Rippen 5 vergrößert ist. Die beiden Enden 6 und 7 des Latentwärmespeichers 4 sind strömungsgünstig ausgebildet. Die Gesamtanordnung ist zur Vermeidung von Speicherverlusten mit einer thermischen Isolierschicht 8 umgeben, welche auch die Abgaszu- und Abführleitungen 2 und 3 bis in den Bereich von darin angeordneten Klappen 9 umschließt. Diese Klappen 9 werden bei Stillstand der Brennkraftmaschine geschlossen um einen Wärmeabfluß durch die Abgasanlage zu vermeiden.

Bei der in den Figuren 3 und 4 dargestellten Ausführungsvariante wird der Katalysator 1 von einem mantelförmigen Latentwärmespeicher 4 umfaßt, welcher hohlzylindrisch ausgeführt ist. Auch hier können die Kontaktflächen zwischen Wärmespeicher 4 und Katalysator 1 die Oberfläche vergrößernde Rippen oder Fortsätze aufweisen.

## Patentansprüche

1. Katalysator in der Abgasanlage einer Brennkraftmaschine, vorzugsweise in einem Hybridantrieb, **dadurch gekennzeichnet**, daß der Latentwärmespeicher (4) im Inneren des Katalysators (1) angeordnet ist, oder den Katalysator (1) mantelförmig umschließt, sodaß der Katalysator (1) in direktem thermischem Kontakt mit dem Latentwärmespeicher (4) steht.

2. Katalysator nach Anspruch 1, **dadurch gekennzeichnet**, daß der Latentwärmespeicher (4) im wesentlichen zylindrisch bzw. hohlzylindrisch ausgeführt ist und ggf. dessen Oberfläche vergrößernde Rippen (5) aufweist.

3. Katalysator nach Anspruch 1 oder 2, **dadurch gekennzeichnet**, daß der Katalysator (1) samt zugeordnetem Latentwärmespeicher (4) von einer thermischen Isolierschicht (8) umgeben ist.

4. Katalysator nach einem der Ansprüche 1 bis 3, **dadurch gegennzeichnet**, daß in der Abgaszu- und Abgasabführleitung (2, 3) des Katalysators (1) Klappen (9) angeordnet sind, welche sich bei Stillstand der Brennkraftmaschine schließen.

5. Katalysator nach einem der Ansprüche 1 bis 4, **dadurch gekennzeichnet**, daß der Latentwärmespeicher (4) ein Speichermedium enthält, dessen Umwandlungs- bzw. Umkristallisationstemperatur bei der Ansprechtemperatur des Katalysators (1) oder knapp darüber, vorzugsweise zwischen 200°C und 350°C, liegt.

6. Katalysator nach Anspruch 5, **dadurch gekennzeichnet,** daß das Speichermedium aus einem Metall oder einer metallischen Lagierung mit hoher spezifischer Wärmekapazität und geringem spezifischem Gewicht, vorzugsweise aus einer Lithiumlegierung besteht.
